# DEMANDE DE BREVET EUROPEEN

(11) **EP 4 693 275 A1**
(43) Date de publication de la demande: **11.02.2026**
(21) Numéro de dépôt: 25193040.0
(22) Date de dépôt: 31.07.2025
(51) Int. Cl.: G10K 11/172, F02K 1/00

(54) **STRUCTURE D ABSORPTION ACOUSTIQUE COMPORTANT UNE STRUCTURE ALVÉOLAIRE AINSI QU AU MOINS UNE ENCEINTE DE CLOISONNEMENT POSITIONNÉE DANS UNE CELLULE DE LA STRUCTURE ALVÉOLAIRE**

(30) Priorité: 05.08.2024 FR 2408644
(71) Demandeur: AIRBUS OPERATIONS (S.A.S.), 31060 Toulouse (FR)
(72) Inventeur: BOURHIS, Arnaud, 31060 TOULOUSE (FR); PRZYBYLA, Benoit, 31060 TOULOUSE (FR)
(74) Mandataire: Fantin, Laurent

(57) **Abrégé**

L'invention a pour objet une structure d'absorption acoustique comprenant au moins une structure alvéolaire (52) qui comporte au moins une enceinte de cloisonnement (62) positionnée dans une des cellules (60) de la structure alvéolaire (52) et reliée à au moins une cloison (58) délimitant ladite cellule (60), ladite enceinte de cloisonnement (62) séparant une zone intérieure (ZI) située à l'intérieur de l'enceinte de cloisonnement (62) ainsi qu'une zone extérieure (ZE) située dans la cellule (60) et à l'extérieur de l'enceinte de cloisonnement (62), ladite enceinte de cloisonnement (62) comportant au moins un orifice traversant (70) configuré pour faire communiquer les zones intérieure et extérieure (ZE, ZI).

Cette configuration permet de délimiter de manière simple plusieurs zones dans une même cellule, contribuant à augmenter le spectre des fréquences des ondes acoustiques atténuées. L'invention a également pour objet un aéronef comprenant au moins une telle structure d'absorption acoustique.

## Description

La présente demande se rapporte à une structure d'absorption acoustique comportant une structure alvéolaire et au moins une enceinte de cloisonnement positionnée dans une cellule de la structure alvéolaire ainsi qu'à un aéronef comportant au moins une telle structure d'absorption acoustique.

Selon un mode de réalisation de l'art antérieur, un ensemble de propulsion d'aéronef comprend une nacelle ainsi qu'une turbomachine double flux, positionnée à l'intérieur de la nacelle, qui présente, à l'arrière, un conduit d'éjection primaire par lequel sont évacués les gaz brûlés issus de la combustion. Ce conduit d'éjection primaire comprend, au niveau de sa peau, une structure d'absorption acoustique pour atténuer le bruit sur plusieurs bandes de fréquences, comme les bruits liés à la combustion (300-1000Hz) et ceux liés au fonctionnement de la turbine (supérieurs ou égaux à 4000Hz) par exemple.

Selon un premier mode de réalisation, une structure d'absorption acoustique comprend au moins une structure alvéolaire positionnée entre une couche acoustiquement résistive en contact avec un milieu dans lequel se propagent des ondes acoustiques et une couche réflectrice. Ce mode de réalisation permet d'obtenir un résonateur % d'onde adapté pour atténuer des ondes sonores avec des fréquences élevées. Selon ce mode de réalisation, la plage de fréquences des ondes sonores atténuées dépend de la hauteur des cellules de la structure alvéolaire.

Selon un deuxième mode de réalisation visible sur la figure 1 et décrit dans le document FR094668, une structure d'absorption acoustique 10 comprend des première et deuxième structures alvéolaires 12, 14 positionnées entre une couche acoustiquement résistive 16 en contact avec un milieu dans lequel se propagent des ondes acoustiques et une couche réflectrice 18. Cette structure d'absorption acoustique 10 comprend une couche de séparation 20 intercalée entre les première et deuxième structures alvéolaires 12, 14, la première structure alvéolaire 12 étant intercalée entre la couche acoustiquement résistive 16 et la couche de séparation 20, la deuxième structure alvéolaire 14 étant intercalée entre la couche réflectrice 18 et la couche de séparation 20.

Selon ce deuxième mode de réalisation, la couche de séparation 20 comprend des orifices 22 permettant de faire communiquer les cellules de la première structure alvéolaire 12 avec celles de la deuxième structure alvéolaire 14, chaque orifice 22 étant prolongé par un tube 24 positionné dans la deuxième structure alvéolaire 14.

La structure d'absorption acoustique 10 permet d'obtenir deux types de résonateurs, un premier résonateur de type Helmholtz au niveau des cellules de la première structure alvéolaire 12, adapté pour atténuer les ondes sonores basses fréquences, ainsi qu'un deuxième résonateur de type ¼ d'ondes au niveau des cellules de la deuxième structure alvéolaire 14, adapté pour atténuer les ondes sonores hautes fréquences.

Selon ce deuxième mode de réalisation, chaque tube 24 est relié par une liaison 24.1 à la couche de séparation puis les première et deuxièmes structures alvéolaires 12, 14 sont reliées par des liaisons 12.1, 14.1 à la couche de séparation 20. Les cellules des première et deuxième structures alvéolaires 12, 14 doivent être parfaitement alignées afin que chaque cellule de la première structure alvéolaire 12 ne communique qu'avec une seule cellule de la deuxième structure alvéolaire 14.

Même si ce deuxième mode de réalisation permet d'atténuer les ondes sonores sur des plages de fréquences plus larges, il n'est pas pleinement satisfaisant car le nombre important de liaisons conduit à augmenter la masse de la structure d'absorption acoustique 10 et à complexifier son procédé de fabrication. Ce dernier est d'autant plus complexe à mettre en œuvre que les cellules des première et deuxième structures alvéolaires doivent être parfaitement alignées pour obtenir un fonctionnement optimal. Enfin, la mise en forme selon un profil courbe de la structure d'absorption acoustique 10 s'avère difficile compte tenu des liaisons 12.1, 14.1 qui relient les extrémités des parois délimitant les cellules des première et deuxième parois alvéolaires 12, 14 avec la couche de séparation 20.

La présente invention vise à remédier à tout ou partie des inconvénients de l'art antérieur.

A cet effet, l'invention a pour objet une structure d'absorption acoustique comprenant au moins une structure alvéolaire intercalée entre une couche acoustiquement résistive et une couche réflectrice, la structure alvéolaire comprenant une première face en contact avec la couche acoustiquement résistive, une deuxième face en contact avec la couche réflectrice ainsi qu'une multitude de cellules débouchant chacune au niveau des première et deuxième faces, chaque cellule étant délimitée par au moins une cloison.

Selon l'invention, la structure alvéolaire comprend au moins une enceinte de cloisonnement positionnée dans une des cellules de la structure alvéolaire et reliée à au moins une cloison délimitant la cellule, ladite enceinte de cloisonnement séparant une zone intérieure située à l'intérieur de l'enceinte de cloisonnement ainsi qu'une zone extérieure située dans la cellule et à l'extérieur de l'enceinte de cloisonnement, ladite enceinte de cloisonnement comportant au moins un orifice traversant configuré pour faire communiquer les zones intérieure et extérieure.

Cette solution permet de créer, de manière simple, dans une cellule plusieurs zones qui forment chacune un résonateur configuré pour atténuer des ondes acoustiques présentant des fréquences comprises dans une plage de fréquences donnée, contribuant ainsi à une atténuation acoustique sur un large spectre de fréquences.

Selon une autre caractéristique, chaque enceinte de cloisonnement comprend :
- au moins une paroi tubulaire sensiblement parallèle à la direction de cloison, reliée à au moins une cloison délimitant la cellule, qui s'étend entre des première et deuxième extrémités,
- une première paroi transversale reliée de manière étanche à la paroi tubulaire au niveau de la première extrémité,
- au moins une deuxième paroi transversale reliée de manière étanche à la paroi tubulaire au niveau de la deuxième extrémité,
- l'orifice traversant étant situé au niveau de la première paroi transversale, les première et deuxième parois transversales étant espacées de la couche acoustiquement résistive et de la couche résistive.

Selon une autre caractéristique, la paroi tubulaire présente une section transversale extérieure inférieure à la section transversale intérieure de la cellule et supérieure ou égale à 75% de la section transversale intérieure de ladite cellule.

Selon une autre caractéristique, l'enceinte de cloisonnement comprend un conduit qui présente une première extrémité reliée à la première paroi transversale autour de l'orifice traversant ainsi qu'une deuxième extrémité distante de la première paroi transversale, le conduit comprenant un diamètre intérieur sensiblement égal à celui de l'orifice traversant.

Selon une autre caractéristique, le conduit et l'orifice traversant présentent une section de passage inférieure ou égale à 25% de la section transversale intérieure de la paroi tubulaire.

Selon une autre caractéristique, chaque cellule est délimitée par plusieurs cloisons, l'enceinte de cloisonnement étant reliée à au plus deux cloisons délimitant la cellule.

Selon une autre caractéristique, la paroi tubulaire comprend au moins un méplat configuré pour être plaqué contre une cloison de la structure alvéolaire et relié à cette dernière.

Selon une autre caractéristique, la paroi tubulaire présente une section transversale extérieure constante entre les première et deuxième parois transversales et comporte une partie principale courbe qui présente une section approximativement en arc de cercle, un méplat principal ainsi que deux méplats secondaires positionnés de part et d'autre du méplat principal, reliant ce dernier à la partie principale courbe.

Selon une autre caractéristique, les cellules présentent chacune une section hexagonale inscrite dans un cercle de diamètre cellule. En complément, la partie principale courbe et les deux méplats secondaires sont espacés des cloisons de la cellule d'un espacement compris entre 5 et 50% du diamètre cellule.

Selon une autre caractéristique, les première et deuxième parois transversales sont orientées respectivement vers la couche réflectrice et la couche acoustiquement résistive.

Selon une autre caractéristique, les première et deuxième parois transversales sont orientées respectivement vers la couche acoustiquement résistive et la couche réflectrice.

L'invention a également pour objet un aéronef comprenant au moins une structure d'absorption acoustique selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une coupe schématique d'une structure d'absorption acoustique illustrant un mode de réalisation de l'art antérieur,
- La figure 2 est une vue latérale d'un aéronef,
- La figure 3 est une coupe longitudinale d'une partie d'un ensemble de propulsion d'aéronef,
- La figure 4 est une vue de dessus d'une partie d'une structure alvéolaire illustrant un mode de réalisation de l'invention,
- La figure 5 est une vue en perspective selon un premier angle de vue d'une enceinte de cloisonnement positionnée dans un moule illustrant un mode de réalisation de l'invention,
- La figure 6 est une vue en perspective selon un deuxième angle de vue de l'enceinte de cloisonnement et du moule visible sur la figure 5,
- La figure 7 est une coupe d'une enceinte de cloisonnement illustrant un mode de réalisation de l'invention,
- La figure 8 est une vue en perspective d'une enceinte de cloisonnement illustrant un mode de réalisation de l'invention,
- La figure 9 est une représentation schématique des différentes étapes de montage d'une enceinte de cloisonnement dans une cellule d'une structure alvéolaire illustrant un mode de réalisation de l'invention,
- La figure 10 est une coupe d'une structure d'absorption acoustique illustrant un premier mode de réalisation de l'invention,
- La figure 11 est une coupe d'une structure d'absorption acoustique illustrant un deuxième mode de réalisation de l'invention.

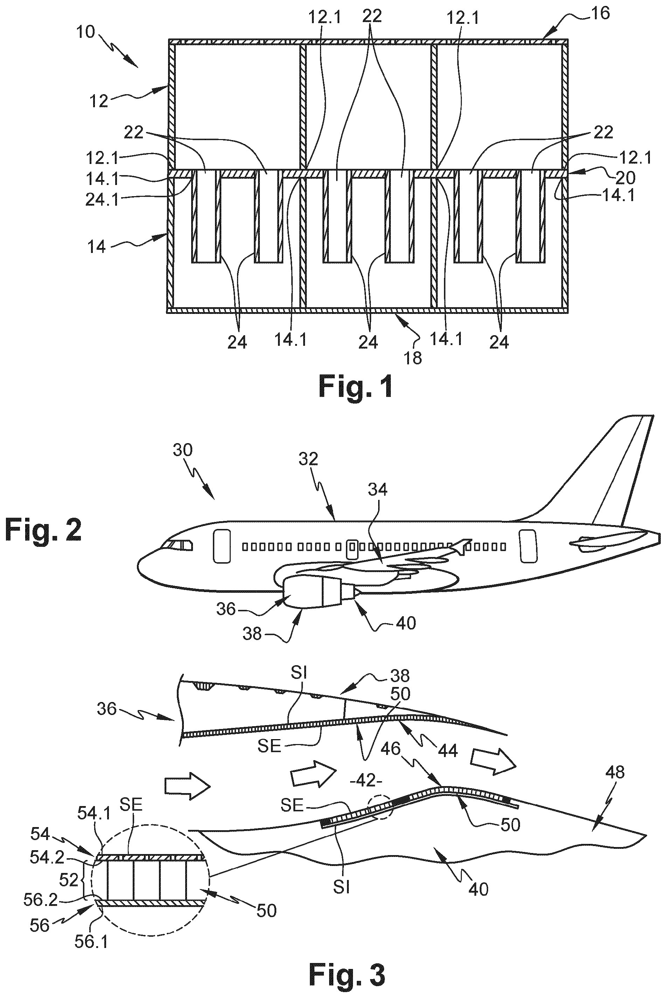

Sur la figure 2, on a représenté un aéronef 30 qui présente un fuselage 32, deux ailes 34, disposées de part et d'autre du fuselage 32, et des ensembles de propulsion 36 fixés sous les ailes 34. Chaque ensemble de propulsion 36 comprend une nacelle 38 et une turbomachine 40 positionnée à l'intérieur de la nacelle 38.

Selon un mode de réalisation visible sur la figure 3, la turbomachine 40 comprend, à l'arrière, un conduit d'éjection primaire 42, par lequel s'échappent des gaz brûlés dans la turbomachine 40, qui est délimité à l'extérieur par une paroi extérieure 44 et à l'intérieur par une paroi intérieure 46 prolongée par un cône de tuyère 48.

Selon une configuration, les parois extérieure et intérieure 44, 46 comprennent chacune au moins une structure d'absorption acoustique 50.

Chaque structure d'absorption acoustique 50 comprend une surface extérieure SE en contact avec un milieu dans lequel se propagent des ondes acoustiques et une surface intérieure SI opposée à la surface extérieure SE.

Bien que décrite appliquée à un conduit d'éjection primaire 42, l'invention n'est pas limitée à cette application. Ainsi, la structure d'absorption acoustique 50 peut être positionnée au niveau de parois qui présentent une surface extérieure SE en contact avec un milieu dans lequel se propagent des ondes sonores.

Comme illustré sur les figures 3, 10 et 11, chaque structure d'absorption acoustique 50 comprend au moins une structure alvéolaire 52 intercalée entre une couche acoustiquement résistive 54 perméable aux ondes sonores et une couche réflectrice 56 imperméable aux ondes sonores. La couche acoustiquement résistive 54 présente une première face 54.1 correspondant à la surface extérieure SE ainsi qu'une deuxième face 54.2 orientée vers la structure alvéolaire 52 et reliée à cette dernière. La couche réflectrice 56 présente une première face 56.1 correspondant à la surface intérieure SI et une deuxième face 56.2 orientée vers la structure alvéolaire 52 et reliée à cette dernière.

La couche acoustiquement résistive 54, la couche réflectrice 56, la liaison entre la couche acoustiquement résistive 54 et la structure alvéolaire 52 ainsi que la liaison entre la couche réflectrice 56 et la structure alvéolaire 52 ne sont pas plus décrites car elles peuvent être identiques à celles de l'art antérieur.

La structure alvéolaire 52 s'étend entre une première face 52.1 en contact avec la couche acoustiquement résistive 54 et une deuxième face 52.2 en contact avec la couche réflectrice 56 et comprend une multitude de cloisons 58 qui présentent chacune des premiers et deuxièmes bords positionnés respectivement au niveau des première et deuxième faces 52.1, 52.2. Les cloisons 58 sont reliées entre elles de manière à délimiter des cellules 60 débouchant au niveau des première et deuxième faces 52.1, 52.2.

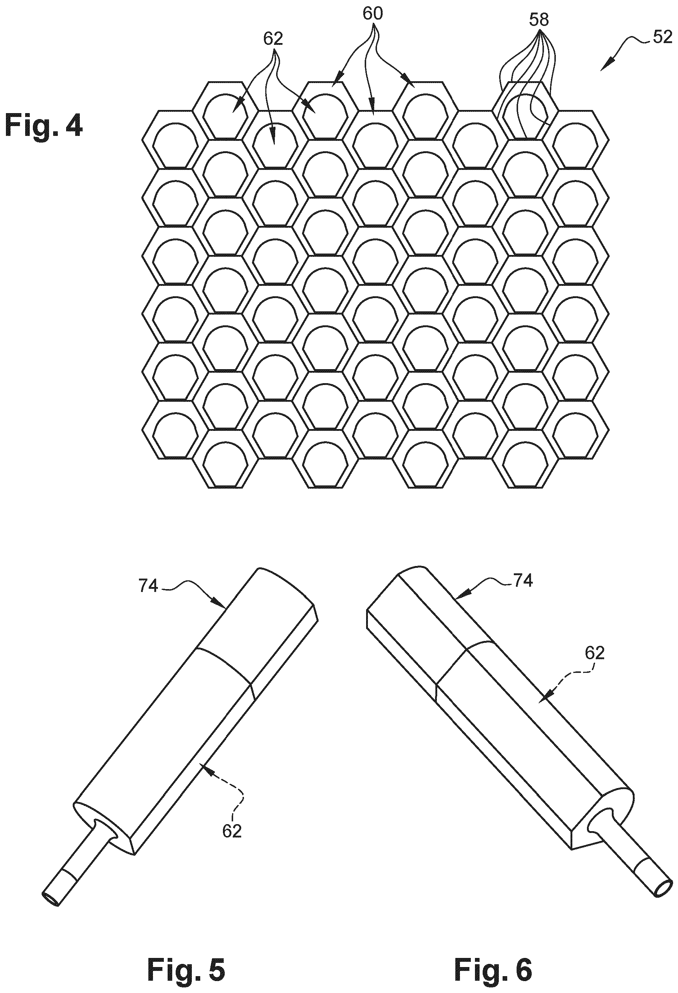

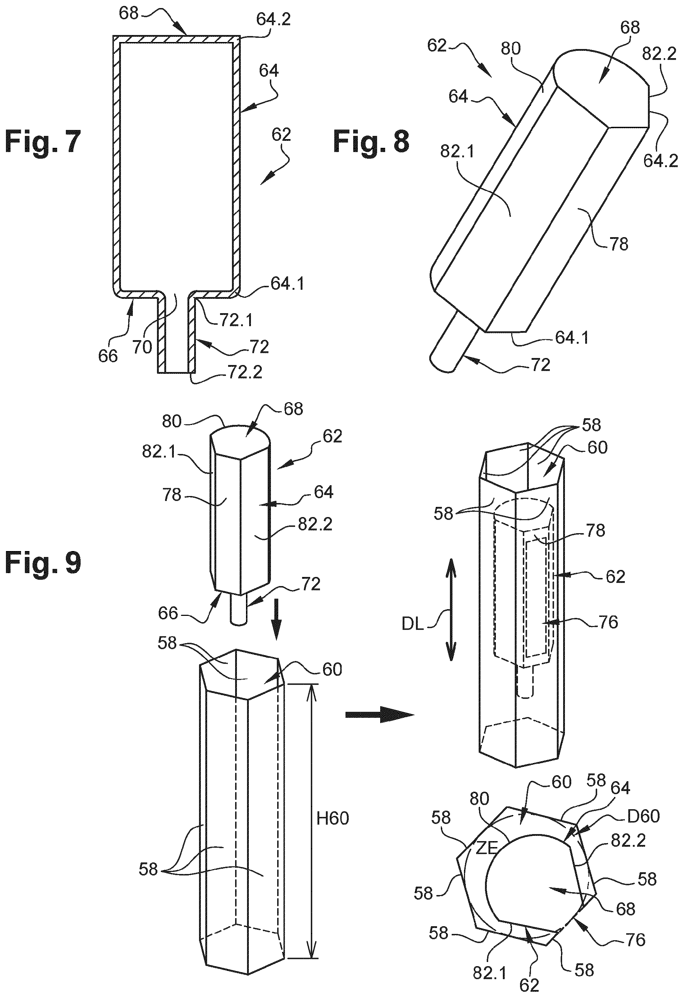

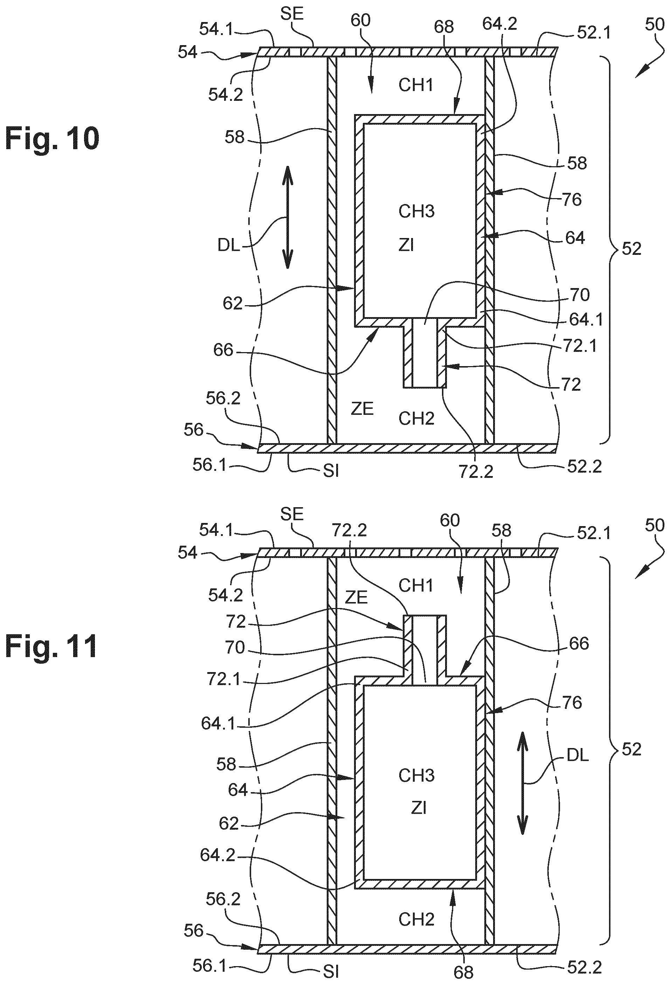

Selon un mode de réalisation visible sur les figures 4 et 9, la structure alvéolaire 52 est délimitée par plusieurs parois. Comme illustré sur la figure 10, chaque cellule 60 est une structure en nid d'abeilles délimitée par six cloisons 58 sensiblement rectangulaires et présente une section hexagonale avec six côtés identiques. Chaque cellule 60 hexagonale est inscrite dans un cercle de diamètre cellule D60. Le diamètre cellule est compris entre 9,6 et 19.1 mm. Chaque cellule 60 présente une hauteur cellule H60 qui correspond à la distance séparant les première et deuxième faces 52.1, 52.2. La hauteur cellule H60 est comprise entre 30 et 70 mm. Chaque cloison 58 rectangulaire présente une longueur égale à la hauteur cellule H60, comprise entre 30 et 70 mm, ainsi qu'une largeur comprise entre environ 5 et 12 mm. Bien entendu, l'invention n'est pas limitée à ce mode de réalisation pour les cellules 60. Chacune d'elles débouche au niveau de première et deuxième extrémités obturées respectivement par la couche acoustiquement résistive 54 et la couche réflectrice 56. Chaque cellule 60 est délimitée par au moins une cloison 58 parallèle à une direction de cloison DL sensiblement perpendiculaire à la couche acoustiquement résistive 54 et/ou à la couche réflectrice 56.

Comme illustré sur les figures 4, 9 à 11, la structure alvéolaire 52 comprend au moins un système de cloisonnement positionné dans une cellule 60 de la structure alvéolaire 52 et configuré pour la scinder en plusieurs chambres. Ce système de cloisonnement comprend une enceinte de cloisonnement 62 positionnée dans une cellule 60. Selon une configuration, la structure alvéolaire 52 comprend plusieurs enceintes de cloisonnement 62 positionnées chacune dans une cellule 60. Selon un agencement, dans au moins une zone de la structure alvéolaire 52, cette dernière comprend une enceinte de cloisonnement 62 dans chaque cellule 60.

Chaque enceinte de cloisonnement 62 comprend au moins une paroi tubulaire 64, sensiblement parallèle à la direction de cloison DL, qui s'étend entre des première et deuxième extrémités 64.1, 64.2, une première paroi transversale 66 reliée à la paroi tubulaire 64 au niveau de la première extrémité 64.1 ainsi qu'au moins une deuxième paroi transversale 68 reliée à la paroi tubulaire 64 au niveau de la deuxième extrémité 64.2. La paroi tubulaire 64 ainsi que les première et deuxième parois transversales 66, 68 sont reliées entre elles de manière étanche afin de séparer une zone intérieure ZI et une zone extérieure ZE. Les première et deuxième parois transversales 66, 68 sont sensiblement parallèles entre elles et à la couche acoustiquement résistive 54 et/ou à la couche réflectrice 56, les première et deuxième parois transversales 66, 68 étant espacées de la couche acoustiquement résistive 54 et de la couche résistive 56. Ainsi, l'enceinte de cloisonnement 62 est distante de la couche acoustiquement résistive 54 et de la couche réflectrice 56

La paroi tubulaire 64 présente une section transversale extérieure (positionnée dans un plan parallèle à la couche acoustiquement résistive 54 et/ou à la couche réflectrice 56) constante entre les première et deuxième parois transversales 66, 68. Ces dernières sont sensiblement perpendiculaires à la paroi tubulaire 64. La section transversale extérieure de la paroi tubulaire 64 est inférieure à la section transversale intérieure de la cellule 60 dans laquelle est positionnée l'enceinte de cloisonnement 62 et supérieure ou égale à 75% de la section transversale intérieure de ladite cellule 60. Cette configuration permet d'obtenir entre l'enceinte de cloisonnement 62 et les cloisons 58 de la cellule 60 une réduction de passage permettant de délimiter des première et deuxième chambres CH1, CH2 de part et d'autre de l'enceinte de cloisonnement 62.

L'enceinte de cloisonnement 62 comprend au moins un orifice traversant 70 situé au niveau de la paroi tubulaire 64, de la première paroi transversale 66 ou de la deuxième paroi transversale 68. Selon un mode de réalisation, l'orifice traversant 70 est situé au niveau de la première paroi transversale 66 et sensiblement centré par rapport à la paroi tubulaire 64. Selon une configuration, l'enceinte de cloisonnement 62 comprend un conduit 72 qui présente une première extrémité 72.1 reliée à la première paroi transversale 66 autour de l'orifice traversant 70 ainsi qu'une deuxième extrémité 72.2 distante de la première paroi transversale 66. Le conduit 72 est sensiblement parallèle à la direction de cloison DL et approximativement centré par rapport à la paroi tubulaire 64. Le conduit 72 comprend un diamètre intérieur sensiblement égal à celui de l'orifice traversant 70.

Le conduit 72 et l'orifice traversant 70 présentent une section de passage inférieure ou égale à 25% de la section transversale intérieure de la paroi tubulaire 64. Le conduit 72 présente une section cylindrique constante entre ses deux extrémités. Le conduit 72 est sensiblement perpendiculaire à la première paroi transversale 66. Pour donner un ordre de grandeur, le conduit 72 présente un diamètre intérieur compris entre 0,5 et 5 mm ainsi qu'une hauteur (distance entre ses extrémités) comprise entre 1 et 15 mm.

Chaque enceinte de cloisonnement 62 est réalisée d'un seul tenant, les première et deuxième parois transversales 66, 68, la paroi tubulaire 64 et le conduit 72 étant réalisés lors d'une même étape de fabrication.

Selon un mode de réalisation, l'enceinte de cloisonnement 62 est réalisée en matière plastique.

Selon un mode opératoire, chaque enceinte de cloisonnement 62 est obtenue par un procédé de moulage par extrusion soufflage en utilisant un moule 74 qui présente des formes intérieures identiques aux formes extérieures de l'enceinte de cloisonnement 62.

Ce procédé de moulage par extrusion soufflage permet de réaliser des enceintes de cloisonnement 62 à des cadences de production élevées. Ce procédé permet également de pouvoir aisément modifier la section et/ou la hauteur de la paroi tubulaire 64 en ajustant les formes du moule 74.

Bien entendu, l'invention n'est pas limitée à ce mode opératoire. A titre d'exemple, l'enceinte de cloisonnement 62 pourrait être réalisée par un procédé d'injection ou tout autre procédé.

Pour chaque enceinte de cloisonnement 62, la structure alvéolaire 52 comprend au moins une liaison 76 reliant la paroi tubulaire 64 de l'enceinte de cloisonnement 62 et au moins une cloison 58 délimitant la cellule 60 dans laquelle est positionnée l'enceinte de cloisonnement 62. Cette liaison 76 peut être obtenue par collage, agrafage, soudage ou autres.

Selon un mode de réalisation, la paroi tubulaire 64 comprend au moins un méplat 78 configuré pour être plaqué contre une cloison 58 de la structure alvéolaire 52 et relié à cette dernière par la liaison 76. Selon une configuration, chaque méplat 78 s'étend sur toute la hauteur de la paroi tubulaire 64 (dimension prise d'une paroi transversale 66, 68 à l'autre).

Le fait de relier la paroi tubulaire 64 à une seule cloison 58 de la structure alvéolaire 52 permet de conserver une grande flexibilité au niveau de la structure alvéolaire 52. En variante, l'enceinte de cloisonnement 62 pourrait comprendre deux méplats reliés à deux cloisons. Pour conserver une certaine flexibilité, l'enceinte de cloisonnement 62 est reliée à au plus deux cloisons 58 de la cellule 60.

En complément, la paroi tubulaire 64 présente une partie principale courbe 80 qui présente une section approximativement en arc de cercle qui s'étend sur toute la hauteur de la paroi tubulaire 64 (dimension prise d'une paroi transversale 66, 68 à l'autre).

Dans le cas de cellules 60 de section hexagonale, la paroi tubulaire 64 comprend un méplat principal 78 ainsi que deux méplats secondaires 82.1, 82.2 positionnés de part et d'autre du méplat principal 78, reliant ce dernier à la partie principale courbe 80. Cette solution permet, lorsque le méplat principal 78 est fixé sur l'une des cloisons 58 de la cellule 60 hexagonale, de ménager un espacement entre d'une part les autres cloisons 58 de la cellule 60 et d'autre part la partie principale courbe 80 et les méplats secondaires 82.1, 82.2 de la paroi tubulaire 64. Pour donner un ordre de grandeur, les méplats secondaires 82.1, 82.2 forment entre eux un angle compris entre 40 et 140°. Cet angle est déterminé de manière à ce que chacun des méplats secondaires 82.1, 82.2 soit sensiblement parallèle à l'une des cloisons 58 de la cellule 60. Par ailleurs, en dehors du méplat principal 78 qui est plaqué contre l'une des cloisons 58 de la cellule 60, la partie principale courbe 80 et les deux méplats secondaires 82.1, 82.2 sont espacés des cloisons 58 de la cellule 60 d'un espacement compris entre 5 et 50% du diamètre D60 de la cellule 60.

Selon un agencement, la première ou deuxième paroi transversale 66, 68 la plus proche de la couche acoustiquement résistive 54 est espacée de cette dernière d'une distance comprise entre 5 mm et 70% de la hauteur H60 de la cellule 60. Pour une hauteur de cellule H60 comprise entre 30 et 70 mm, la paroi tubulaire 64 présente une hauteur (distance entre les première et deuxième parois transversales 66, 68) comprise entre 10 et 40 mm.

Bien entendu, l'invention n'est pas limitée à ce mode de réalisation. Quel que soit le mode de réalisation, la structure alvéolaire 52 comprend au moins une enceinte de cloisonnement 62 positionnée dans une cellule 60 de la structure alvéolaire 52 et reliée à au moins une cloison 58 délimitant la cellule 60, ladite enceinte de cloisonnement 62 séparant une zone intérieure ZI située à l'intérieur de l'enceinte de cloisonnement 62 ainsi qu'une zone extérieure ZE située dans la cellule 60 et à l'extérieur de l'enceinte de cloisonnement 62, ladite enceinte de cloisonnement 62 comportant au moins un orifice traversant 70 configurée pour faire communiquer les zones intérieure et extérieure ZE, ZI.

Selon un premier mode de réalisation visible sur la figure 10, la première paroi transversale 66 est orientée vers la couche réflectrice 56 et la deuxième paroi transversale 68 est orientée vers la couche acoustiquement résistive 54. Dans ce cas, le conduit 72 débouche en direction de la couche réflectrice 56.

Selon un deuxième mode de réalisation visible sur la figure 11, la première paroi transversale 66 est orientée vers la couche acoustiquement résistive 54 et la deuxième paroi transversale 68 est orientée vers la couche réflectrice 56. Dans ce cas, le conduit 72 débouche en direction de la couche acoustiquement résistive 54.

Selon ces deux modes de réalisation et de manière privilégiée, l'enceinte de cloisonnement 62 est distante de la couche acoustiquement résistive 54 et de la couche réflectrice 56 et faiblement espacée des cloisons 58 de la cellule 60 dans laquelle est positionnée l'enceinte de cloisonnement 62. Par conséquent, l'enceinte de cloisonnement 62 permet de scinder la cellule 60 en une première chambre CH1 située entre la couche acoustique résistive 54 et l'enceinte de cloisonnement 62, une deuxième chambre CH2 située entre la couche réflectrice 56 et l'enceinte de cloisonnement 62 ainsi qu'une troisième chambre CH3 située à l'intérieur de l'enceinte de cloisonnement 62. Cette solution permet d'obtenir trois résonateurs configurés pour absorber des ondes acoustiques sur un large spectre.

Selon le premier mode de réalisation visible sur la figure 10, les ondes acoustiques passent à travers la couche acoustiquement résistive 54 et pénètrent dans la première chambre CH1 qui forme un premier résonateur configuré pour absorber des ondes acoustiques présentant des fréquences comprises dans une première plage. Les ondes acoustiques non absorbées passent entre les cloisons 58 de la cellule 60 et l'enceinte de cloisonnement 62 et pénètrent dans la deuxième chambre CH2 qui forme un deuxième résonateur configuré pour absorber des ondes acoustiques présentant des fréquences comprises dans une deuxième plage. Les ondes acoustiques non absorbées pénètrent alors, via le conduit 72, dans l'enceinte de cloisonnement 62 qui forme un troisième résonateur configuré pour absorber des ondes acoustiques présentant des fréquences comprises dans une troisième plage.

Selon le deuxième mode de réalisation visible sur la figure 11, les ondes acoustiques passent à travers la couche acoustiquement résistive 54 et pénètrent dans la première chambre CH1 qui forme un premier résonateur configuré pour absorber des ondes acoustiques présentant des fréquences comprises dans une première plage. Certaines ondes acoustiques non absorbées passent entre les cloisons 58 de la cellule 60 et l'enceinte de cloisonnement 62 et pénètrent dans la deuxième chambre CH2 qui forme un deuxième résonateur configuré pour absorber des ondes acoustiques présentant des fréquences comprises dans une deuxième plage. D'autres ondes acoustiques non absorbées pénètrent via le conduit 72 dans l'enceinte de cloisonnement 62 qui forme un troisième résonateur configuré pour absorber des ondes acoustiques présentant des fréquences comprises dans une troisième plage.

Selon un mode de production, un procédé de fabrication d'une structure d'absorption acoustique comprend une étape de réalisation d'une structure alvéolaire 52 comprenant des première et deuxième faces 52.1, 52.2 planes, une étape d'insertion de chaque enceinte de cloisonnement 62 dans une cellule 60, une étape de fixation de l'enceinte de cloisonnement 62 inséré dans la cellule 60 à au moins une cloison 58 de la cellule 60, une étape de formage de la structure alvéolaire 52 ainsi que des étapes de mise en place d'une couche acoustiquement résistive 54 et d'une couche réflectrice 56 réalisées après l'étape de fixation des enceintes de cloisonnement 62 dans les cellules 60 de la structure alvéolaire 52.

L'étape d'insertion des enceintes de cloisonnement 62 peut se faire à l'unité, enceinte de cloisonnement après enceinte de cloisonnement, ou à plusieurs, plusieurs enceintes de cloisonnement étant simultanément insérées.

L'étape d'insertion des enceintes de cloisonnement 62 peut être mécanisée et/ou réalisée avant ou après l'étape de formage.

Comme illustré sur la figure 4, les enceintes de cloisonnement 62 peuvent être reliées à des cloisons 58 de la structure alvéolaire 52 parallèles entre elles.

Bien entendu, l'invention n'est pas limitée à ce mode de production de la structure d'absorption acoustique.50.

## Revendications

1. Structure d'absorption acoustique comprenant au moins une structure alvéolaire (52) intercalée entre une couche acoustiquement résistive (54) et une couche réflectrice (56), la structure alvéolaire (52) comprenant une première face (52.1) en contact avec la couche acoustiquement résistive (54), une deuxième face (52.2) en contact avec la couche réflectrice (56) ainsi qu'une multitude de cellules (60) débouchant chacune au niveau des première et deuxième faces (52.1, 52.2), chaque cellule (60) étant délimitée par au moins une cloison (58) ; **caractérisée en ce que** la structure alvéolaire (52) comprend au moins une enceinte de cloisonnement (62) positionnée dans une des cellules (60) de la structure alvéolaire (52) et reliée à au moins une cloison (58) délimitant la cellule (60), ladite enceinte de cloisonnement (62) séparant une zone intérieure (Zl) située à l'intérieur de l'enceinte de cloisonnement (62) ainsi qu'une zone extérieure (ZE) située dans la cellule (60) et à l'extérieur de l'enceinte de cloisonnement (62), ladite enceinte de cloisonnement (62) comportant au moins un orifice traversant (70) configuré pour faire communiquer les zones intérieure et extérieure (ZE, ZI), **en ce que** les cloisons (58) délimitant les cellules (60) sont orientées selon une direction de cloison (DL), **en ce que** chaque enceinte de cloisonnement (62) comprend au moins une paroi tubulaire (64) sensiblement parallèle à la direction de cloison (DL), reliée à au moins une cloison (58) délimitant la cellule (60), qui s'étend entre des première et deuxième extrémités (64.1, 64.2), une première paroi transversale (66) reliée de manière étanche à la paroi tubulaire (64) au niveau de la première extrémité (64.1) ainsi qu'au moins une deuxième paroi transversale (68) reliée de manière étanche à la paroi tubulaire (64) au niveau de la deuxième extrémité (64.2), l'orifice traversant (70) étant situé au niveau de la première paroi transversale (66), et **en ce que** les première et deuxième parois transversales (66, 68) sont espacées de la couche acoustiquement résistive (54) et de la couche résistive (56).

2. Structure d'absorption acoustique selon la revendication précédente, **caractérisée en ce que** la cellule (60) dans laquelle est positionnée l'enceinte de cloisonnement (62) présente une section transversale intérieure et **en ce que** la paroi tubulaire (64) présente une section transversale extérieure inférieure à la section transversale intérieure de la cellule (60) et supérieure ou égale à 75% de la section transversale intérieure de ladite cellule (60).

3. Structure d'absorption acoustique selon l'une des revendications précédentes, **caractérisée en ce que** l'enceinte de cloisonnement (62) comprend un conduit (72) qui présente une première extrémité (72.1) reliée à la première paroi transversale (66) autour de l'orifice traversant (70) ainsi qu'une deuxième extrémité (72.2) distante de la première paroi transversale (66), le conduit (72) comprenant un diamètre intérieur sensiblement égal à celui de l'orifice traversant (70).

4. Structure d'absorption acoustique selon la revendication précédente, **caractérisée en ce que** la paroi tubulaire (64) présente une section transversale intérieure et **en ce que** le conduit (72) et l'orifice traversant (70) présentent une section de passage inférieure ou égale à 25% de la section transversale intérieure de la paroi tubulaire (64).

5. Structure d'absorption acoustique selon l'une des revendications précédentes, **caractérisée en ce que** chaque cellule (60) est délimitée par plusieurs cloisons (58) et **en ce que** l'enceinte de cloisonnement (62) est reliée à au plus deux cloisons (58) délimitant la cellule (60).

6. Structure d'absorption acoustique selon la revendication précédente, **caractérisée en ce que** la paroi tubulaire (64) comprend au moins un méplat (78) configuré pour être plaqué contre une cloison (58) de la structure alvéolaire (52) et relié à cette dernière.

7. Structure d'absorption acoustique selon la revendication précédente, **caractérisée en ce que** la paroi tubulaire (64) présente une section transversale extérieure constante entre les première et deuxième parois transversales (66, 68) et comporte une partie principale courbe (80) qui présente une section approximativement en arc de cercle, un méplat principal (78) ainsi que deux méplats secondaires (82.1, 82.2) positionnés de part et d'autre du méplat principal (78), reliant ce dernier à la partie principale courbe (80).

8. Structure d'absorption acoustique selon la revendication précédente, **caractérisée en ce que** les cellules (60) présentent chacune une section hexagonale inscrite dans un cercle de diamètre cellule (D60) et **en ce que** la partie principale courbe (80) et les deux méplats secondaires (82.1, 82.2) sont espacés des cloisons (58) de la cellule (60) d'un espacement compris entre 5 et 50% du diamètre cellule (D60).

9. Structure d'absorption acoustique selon l'une des revendications précédentes, **caractérisée en ce que** les première et deuxième parois transversales (66, 68) sont orientées respectivement vers la couche réflectrice (56) et la couche acoustiquement résistive (54).

10. Structure d'absorption acoustique selon l'une des revendications précédentes, **caractérisée en ce que** les première et deuxième parois transversales (66, 68) sont orientées respectivement vers la couche acoustiquement résistive (54) et la couche réflectrice (56).

11. Aéronef comprenant au moins une structure d'absorption acoustique selon l'une des revendications précédentes.
